# EUROPÄISCHE PATENTSCHRIFT

(11) **EP 0 803 720 B1**
(45) Veröffentlichungstag und Bekanntmachung des Hinweises auf die Patenterteilung: **28.08.2002**
(21) Anmeldenummer: 97102023.5
(22) Anmeldetag: 08.02.1997
(51) Int. Cl.: G01M 1/24

(54) **Unwuchtmessstation**
Imbalance measuring station
Station de mesure du balourd

(30) Priorität: 23.04.1996 DE 19615891
(43) Veröffentlichungstag der Anmeldung: 29.10.1997
(73) Patentinhaber: Schenck RoTec GmbH, 64293 Darmstadt (DE)
(72) Erfinder: Schönfeld, Harald, 64291 Darmstadt (DE); Kissel, Werner, 68647 Biblis (DE)
(74) Vertreter: Brandt, Ernst-Ulrich, Dipl.-Phys., Dipl.-Ing.

(56) Entgegenhaltungen:
- DE-A- 4 334 244
- US-A- 1 489 699
- US-A- 3 090 237
- DATABASE WPI Section EI, Week 93411. Dezember 1993 Derwent Publications Ltd., London, GB; Class S02, AN 93-327308 XP002084001 & SU 1 769 030 A (MINSK MACH TOOL PRD) , 15. Oktober 1992
- PATENT ABSTRACTS OF JAPAN vol. 5, no. 17 (P-047), 31. Januar 1981 & JP 55 147327 A (KOBE STEEL LTD), 17. November 1980
- PATENT ABSTRACTS OF JAPAN vol. 6, no. 82 (P-116), 20. Mai 1982 & JP 57 019636 A (HITACHI LTD), 1. Februar 1982

## Beschreibung

Die Erfindung betrifft eine Unwuchtmeßstation zur Bestimmung der Unwucht von mehrere Lagerstellen aufweisenden Kurbelwellen, mit einer Einrichtung zum Antrieb der Kurbelwelle, mit auf einer Schwingbrücke abgestützten Lagereinrichtungen zur rotierbaren Lagerung der Kurbelwelle an zwei Lagerstellen der Kurbelwelle und mit Einrichtungen zur Erfassung der Unwuchtschwingungen.

Aus der US-A-1 489 699 ist eine Unwuchtmeß- und -ausgleichseinrichtung bekannt, bei der eine auszuwuchtende Kurbelwelle mit den Lagerstellen an ihren Enden und der Lagerstelle in der Mitte in drei Lagereinrichtungen gelagert ist. Die gemessene Unwucht wird durch Materialauftrag mittels Schweißen ausgeglichen, ohne daß die Kurbelwelle aus der Unwuchtmeß- und -ausgleichseinrichtung ausgelagert wird.

Eine weitere Unwuchtmeßeinrichtung mit drei Lagereinrichtungen für die Kurbelwelle ist der JP 55 147327 A zu entnehmen.

Aus der DE-43 34 244 A1 ist eine Unwuchtmeßstation bekannt, bei der die auszuwuchtende Kurbelwelle in zwei Lagereinrichtungen rotierbar gelagert ist. Beide Lagereinrichtungen sind auf einer Schwingbrücke abgestützt und weisen Lagerrollen als Lagerelemente zur Lagerung der Kurbelwelle auf. Die Kurbelwelle wird von einer auf einem Zapfen der einen Lagereinrichtung drehbar gelagerten Antriebseinrichtung, die mit einem Kurbelzapfen der Kurbelwelle zusammenwirkt, angetrieben; diese Lagereinrichtung ist fest mit der Schwingbrücke verbunden. Die zweite Lagereinrichtung ist axial auf der Schwingbrücke zwecks Anpassung an verschieden lange Kurbelwellen verschiebbar und in der angepaßten Stellung mit einem Befestigungsfuß auf der Schwingbrücke befestigt. Ein Umrüsten der Unwuchtmeßstation auf einen anderen Kurbelwellentyp, beispielsweise Vier-, Fünf- oder Sechs-Zylinder-Kurbelwellen ist durch Verschieben der zweiten Lagereinrichtung zwar möglich, aber umständlich und zeitaufwendig und damit in der Serienfertigung zu kostenaufwendig. Auch würden sich nach Umrüstungen krümmungsbedingte Einflüsse nicht immer vermeiden lassen, da die bei Kurbelwellen prinzipiell vorhandene Krümmung längs ihrer Erstreckung, die größer sein kann als die zulässige Auswuchttoleranz, im allgemeinen nicht durch Auswahl der für die Kurbelwellen optimalen, die Krümmung berücksichtigenden Lagerstellen vernachlässigbar gemacht werden kann.

Der Erfindung liegt daher die Aufgabe zugrunde, eine Unwuchtmeßstation bzw. eine Unwuchtmeß- und Ausgleichstation zu schaffen, mit der unterschiedliche Kurbelwellen ohne aufwendige Umrüstaktionen auch im Hinblick auf ihre Krümmung optimal gelagert und gemessen bzw. gemessen und ausgewuchtet werden können.

Erfindungsgemäß wird diese Aufgabe mit den Merkmalen der Patentansprüche 1 und 2 gelöst. Mit der Erfindung ist sichergestellt, daß Kurbelwellen jedes Typs optimal in zwei Lagerstellen oder Lagerzapfen gelagert werden können, da die Lagereinrichtungen variabel aktiviert werden können.

Aus der SU-1411592-A1 ist zwar eine Unwuchtmeßstation mit zwei Paaren von auf einer Schwingbrücke abgestützten Lagereinrichtungen für die Kurbelwelle bekannt, jedoch ist nur eines dieser Lagereinrichtungs-Paare zur rotierbaren Lagerung in Form von stirnseitigen Lagerspitzen vorgesehen, während das andere Lagereinrichtungs-Paar zur Zwischenlagerung der nicht rotierenden Kurbelwelle an zwei Lagerstellen der Kurbelwelle zwecks Erleichterung der Einlagerung zwischen die beiden Lagerspitzen dient. Eine der die Lagerspitzen aufweisenden Lagereinrichtungen ist axial verschiebbar, um beide Lagerspitzen beim Einlagern in die stirnseitigen kegeligen Aufnahmebohrungen der Kurbelwelle einbringen zu können. Eine Umrüstung auf unterschiedliche Kurbelwellen ist nicht vorgesehen.

Die SU 1 769 030 A offenbart eine Auswuchtmaschine für Kurbelwellen mit einem Maschinenbett, einer Einrichtung zum Antrieb der Kurbelwelle und Lagereinrichtungen zur rotierbaren Lagerung der Kurbelwelle, die auf einer Schwingbrücke abgestützt sind. Zusätzlich zu den beiden auf der Schwingbrücke abgestützten Lagereinrichtungen sind zwei zusätzliche Lagereinrichtungen vorgesehen, die jedoch an den Armen einer am Maschinenbett befestigten Betätigungseinrichtung angebracht und von dieser betätigbar sind und als Gegenhalter vorgesehen sind. Eine Umrüstmöglichkeit der Maschine für unterschiedliche Kurbelwellentypen bzw. eine Verschiebbarkeit der Lagereinrichtungen in Längsrichtung der Kurbelwelle und damit eine Umrüstbarkeit auf verschiedene Kurbelwellentypen ist nicht vergesehen.

Aus der JP 57 019636 ist zwar eine Unwuchtmeßeinrichtung mit zwei separat aktivierbaren Paaren von schwingfähig abgestützten Lagereinrichtungen für einen Rotor bekannt, jedoch ist diese Unwuchtmeßeinrichtung zur Unwuchtmessung eines elastischen Rotors unter variierenden Lagerbedingungen ausgebildet. Es ist während einer Unwuchtmessung jeweils nur ein Paar der Lagereinrichtungen bei der Abstützung des gleichen Rotors in verschiedenen Unwuchtmeßphasen im Einsatz; so daß durch Auswahl eines dieser Paare und Veränderung der Lagersteifigkeit dieser Rotor unter verschiedenen Lagerbedingungen untersucht wird, um so auch das wellenelastischen Verhalten bzw. die unterschiedlichen Schwingungsformen von elastischen Rotoren berücksichtigen zu können und wellenelastische Auslenkungen auf ein tolerierbares Maß zu reduzieren.

Die US-A-3 090 237 offenbart eine Drehbank, die zwecks Auswuchten von Rotoren mit zwei Lagerständern als Lagereinrichtung für den auszuwuchtendenn Rotor umgerüstet werden kann. Jeder dieser beiden Lagerständer weist einen unteren Bereich auf, mit dem er an beliebiger Stelle längs der Erstreckung des Maschinenbetts befestigbar ist sowie einen oberen Bereich, mit dem Rotoren unterschiedlicher Durchmesser fluchtend mit der Drehachse der Drehbank über Lagerrollen abgestützt werden können. Über einen Scherenmechanismus lassen sich die Lagerrollen in der Höhe und in ihrem horizontalen Abstand auf unterschiedliche Rotordurchmesser einstellen.

Mit der Erfindung wird erreicht, daß z. B. Vier-, Fünf- oder Sechs-Zylinder-Kurbelwellen auf einfachste Weise in optimalen Lagerebenen bzw. Lagerstellen gelagert werden können, ohne daß aufwendige Umrüstaktionen erforderlich sind. Es können unterschiedliche Kurbelwellentypen im Mixbetrieb, d. h. in wahlloser Folge, der Unwuchtmeßstation zugeführt und gemessen bzw. gemessen und ausgewuchtet werden ohne Verzicht auf die für die jeweilige Kurbelwelle optimale die Krümmung berücksichtigende Lagerung. Eine Minderung der Auswuchtqualität aufgrund von nicht optimaler Lagerung ist mit der erfindungsgemäßen Ausgestaltung sicher unterbunden. Als besonders vorteilhaft erweisen sich die variablen Lagereinrichtungen auch beim Auswuchtvorgang z. B. durch Bohren an den hierfür vorgesehenen Stellen der Kurbelwelle, da sich eng benachbart zum Ort des Unwuchtausgleichs Lagereinrichtungen aktivieren lassen, so daß eine stabile Abstützung der Kurbelwelle während des Ausgleichsvorgangs unabhängig von den beim Meßvorgang aktivierten Lagereinrichtungen sichergestellt ist.

Konstruktiv einfach bezüglich der Veränderung des radialen Abstands ist eine Ausführungsform der Erfindung, bei der zumindest eine Lagereinrichtung mehrere Lagerelemente, z. B. zwei Gleitlagerschalen, aufweist. Zweckmäßig ist ferner eine mechanische oder druckmittelbetätigte Verstelleinrichtung, die auch im Hinblick auf die zu messenden Unwuchtschwingungen einfach durch z. B. flexible Schlauchleitungen vom schwingenden System abzukoppeln sind.

Da in der Regel nur Verlagerungswege der Lagereinrichtung zwischen dem aktiven und inaktiven Zustand von weniger als einem Millimeter erforderlich sind, kann dies mechanisch sehr einfach durch elastische Verformungen von Teilen der das oder die Lagerelemente aufweisenden Lagereinrichtung verwirklicht werden. Die Lagereinrichtung wird hierzu mit elastisch verformbaren Bereichen z. B. in Form von Blattfedern versehen, die durch Trennfugen der Lagereinrichtung leicht realisiert werden können. Zur ungestörten Übertragung der Unwuchtschwingungen von dem Lagerelement zur Schwingbrücke sind Anschlageinrichtungen im Verlauf des Übertragungsweges vorgesehen, mit denen die elastisch verformbaren Bereiche nach ihrer Verformung zur Ausschaltung unerwünschter Elastizitäten überbrückt werden. Eine weitere vorteilhafte und erfinderische Ausgestaltung zur Unterdrückung unerwünschter Elastizitäten sieht den Einsatz bistabiler Federelemente vor.

Die elastischen Verformungen zur radialen Verlagerung der Lagereinrichtungen können durch Beaufschlagung über eine Exzentereinrichtung bewirkt werden; Verdrehungen der Exzentereinrichtung erleichtern die Automatisierung der Aktivierung/Inaktivierung verschiedener Lagereinrichtungen. Auf einer einzigen Steuerwelle kann man zwecks einfacher Automatisierung leicht die benötigte Anzahl der Exzentereinrichtungen anordnen, so daß über die Verdrehung der Steuerwelle unterschiedliche Kombinationen von Lagereinrichtungen aktiviert bzw. inaktiviert werden können. Eine kompakte Bauweise ergibt sich bei Anordnung der Steuerwelle zwischen den beiden Längsholmen der Schwingbrücke.

Vorteilhaft ist ferner eine Ausgestaltung, bei der nur eine unterhalb der Zahl der Lagerstellen der Kurbelwelle liegende Anzahl von Lagereinrichtungen vorgesehen ist. Die Anzahl der Lagereinrichtungen wird dabei unter Berücksichtigung der in Frage kommenden Kurbelwellentypen festgelegt.

Die Erfindung wird nachfolgend anhand eines Ausführungsbeispiels, das in der Zeichnung dargestellt ist, näher erläutert.

Es zeigen:
- Fig. 1:: eine erfindungsgemäße Unwuchtmeßstation in einer schematischen Darstellung
- Fig. 2:: eine schematische Darstellung der optimalen Lagerung verschiedener Kurbelwellentypen
- Fig. 3:: eine schematische Darstellung der erfindungsgemäßen Lagerung für verschiedene Kurbelwellen
- Fig. 4:: eine brückenförmige Lagereinrichtung einer erfindungsgemäßen Unwuchtmeßstation.

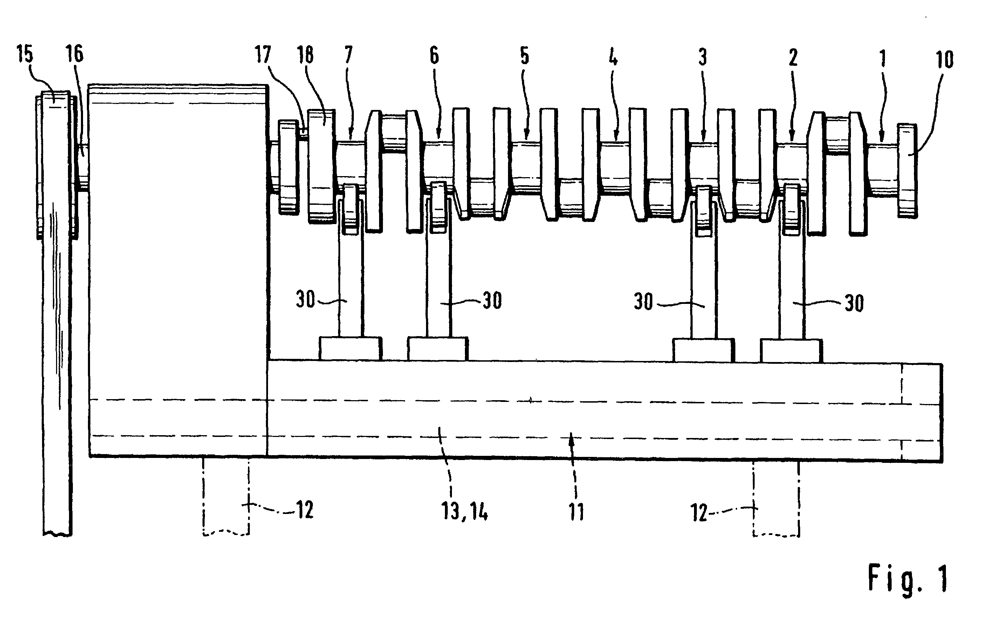

In der Fig. 1 ist eine Unwuchtmeßstation zur Bestimmung der Unwucht von Kurbelwellen, im dargestelten Beispiel eines Kurbelwelle (10) für einen Sechs-Zylinder-Motor mit den Lagerstellen 1 bis 7, schematisch dargestellt.

Die Unwuchtmeßstation weist eine Schwingbrücke 11 auf, die über Federn 12 auf einem nicht dargestellten Maschinenbett abgestützt ist. Die Schwingbrücke 11 besteht im wesentlichen aus zwei Längsholmen 13, 14 und Quertraversen, über die die Längsholme 13, 14 an 14 den Enden verbunden sind. Auf der einen Quertraverse ist die Antriebseinrichtung für die Kurbelwelle 10 angeordnet, die einen auf einer Spindel 16 drehbar angeordneten über einen Riemenantrieb 15 angetriebenen Mitnehmer 17 aufweist, der mit der Flanschscheibe 18 der Kurbelwelle 10 zusammenwirkt.

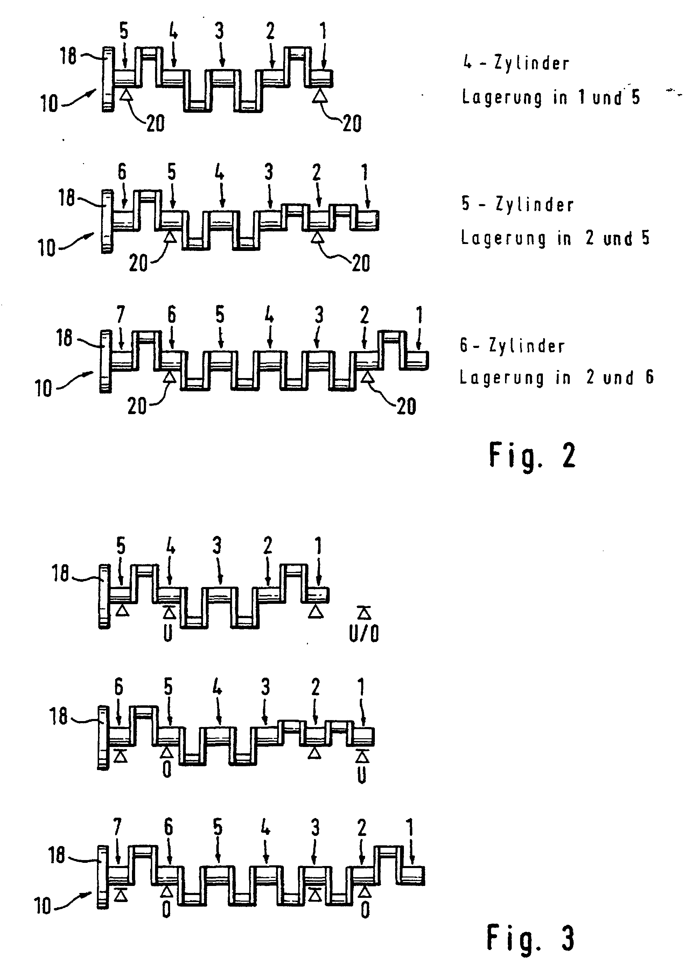

Die Unwuchtmeßstation ist zur Bestimmung der Unwucht von unterschiedlichen Kurbelwellen vorgesehen, beispielsweise von Vier-, Fünf- oder Sechs-Zylinder-Kurbewellen, die jeweils, wie aus Fig. 2 ersichtlich, mit zwei bauartbestimmten, optimalen Lagerstellen gelagert werden, denen jeweils durch Dreiecke 20 symbolisierte Lagereinrichtungen zugeordnet sind.

Im Falle einer Vier-Zylinder-Kurbelwelle sind bauartbedingte bevorzugte Lagerstellen die der Flanschscheibe 18 benachbarte Lagerstelle 5 und die Lagerstelle 1 am anderen Ende der Kurbelwelle, wie aus dem obersten Bild der Fig. 2 ersichtlich.

Die Fünf-Zylinder-Kurbelwelle wird optimal mit den Lagerstellen 5 und 2 gelagert (mittleres Bild der Fig. 2).

Die Sechs-Zylinder-Kurbelwelle wird optimal mit den Lagerstellen 6 und 2 gelagert (unterstes Bild in Fig. 2).

Wie aus Fig. 2 ersichtlich, entspricht die Lagerstelle 5 der Vier-Zylinder-Kurbelwelle der der Flanschscheibe 18 benachbarten Lagerstelle. Die Lagerstelle 5 der Fünf-Zylinder-Kurbelwelle und die Lagerstelle 6 der Sechs-Zylinder-Kurbewelle haben gleichen axialen Abstand zur Flanschscheibe 18 und sind jeweils die auf die der Flanschscheibe 18 benachbarten Lagerstelle folgenden Lagerstellen. Die endseitige Lagerstelle 1 der Vier-Zylinder-Kurbelwelle und die Lagerstelle 2 der Fünf-Zylinder-Kurbelwelle haben gleichen axialen Abstand zu der Flanschscheibe 18, die die axiale Position der Kurbelwellen in der Unwuchtmeßstation bestimmt.

Mit anderen Worten: Für die drei unterschiedlichen Kurbelwellentypen (Vier-Zylinder-, Fünf-Zylinder-, Sechs-Zylinder-Kurbelwellen) sind in ihrer axialen Lage bezüglich der Flanschscheibe 18 teilweise übereinstimmende Lagerstellen vorgesehen, während zwei in ihrer axialen Lage bezüglich der Flanschscheibe 18 für alle drei Kurbelwellentypen übereinstimmende Lagerstellen in der Regel nicht benutzt werden. Dadurch wird es möglich, bei der Unwuchtbestimmung verschiedener Kurbelwellen mit insgesamt nur vier verschiedenen Lagereinrichtungen zu arbeiten.

In der Fig. 3, die in ihrer schematischen Darstellung von der Fig. 2 ausgeht, sind untereinander die Lagerverhältnisse für Vier-, Fünf- und Sechs-Zylinder-Kurbewellen dargestellt. Die Lagereinrichtungen in der Fig. 3 sind wie in der Fig. 2 durch Dreiecke symbolisiert. Aus dem obersten Bild ist ersichtlich, daß zwei der vier Lagereinrichtungen bei Unwuchtmessungen aktiv sind, nämlich die den Lagerstellen 5 und 1 zugeordneten Lagereinrichtungen, während die der Lagerstelle 4 zugeordnete Lagereinrichtung inaktiv ist. Der Lagereinrichtung ganz rechts ist bei dieser Kurbelwelle keine Kurbelwellen-Lagerstelle zugeordnet, so daß es keine Rolle spielt, ob sie einen aktivierten oder inaktivierten Zustand einnimmt.

Im inaktivierten Zustand weisen die Lagerelemente einen Abstand zu den Lagerflächen an den Lagerstellen der Kurbelwelle auf, während in aktiviertem Zustand die Kurbelwelle mit den Lagerflächen ihrer Lagerstellen auf den Lagerelementen aufliegt.

Im mittleren Bild der Fig. 3 ist die der Flanschscheibe 18 benachbarte Lagereinrichtung für die Lagerstelle einer Fünf-Zylinder-Kurbelwelle inaktiv, die benachbarte Lagereinrichtung für 5 aktiv, die Lagereinrichtung für 2 aktiv und die Lagereinrichtung für 1 inaktiv.

Im unteren Bild der Fig. 3 ist die der Flanschscheibe 18 benachbarte Lagereinrichtung für die Lagerstelle 7 einer Sechs-Zylinder-Kurbelwelle 10 inaktiv, die für die Lagerstelle 6 aktiv, die für die Lagerstelle 3 inaktiv und die für die Lagerstelle 2 aktiv.

Für die drei unterschiedlichen Kurbelwellentypen sind somit vier verschiedene Lagereinrichtungen erforderlich, wenn man von den bauartbedingten optimalen Lagerungen ausgeht.

Die in Fig. 1 dargestellte Anordnung einer Kurbelwelle mit Lagereinrichtungen entspricht der prinzipiellen Darstellung im untersten Bild der Fig. 3.

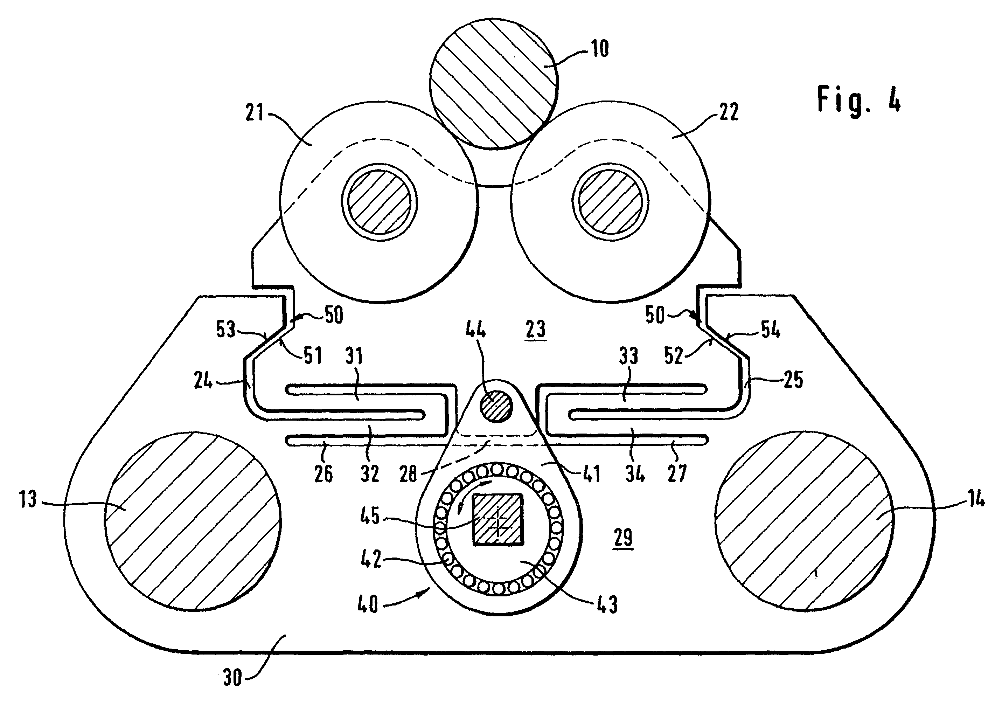

Die Lagereinrichtungen 30 aus Fig. 1 weisen in Achsrichtung gesehen die in Fig. 4 dargestellte Ausgestaltung auf. Die Lagereinrichtung 30 ist verschiebbar auf den beiden Längsholme 13, 14 der Schwingbrücke 11 geführt und in einer bestimmten axialen Stellung fixierbar. Die Lagereinrichtung 30 weist zwei Lagerelemente in Form von drehbar gelagerten Rollen 21, 22 auf, auf denen die Kurbelwelle 10 abstützbar ist. Statt der Lagerung in einem Rollensatz 21, 22 kann eine Lagerung in einem ein- oder mehrteiligen Gleitlager vorgesehen sein.

Die Lagereinrichtung 30 kann von einem aktiven Zustand, in dem die Rollen 21, 22 die Lagerfläche der Kurbelwelle 10 abstützen, in einen inaktiven Zustand, in dem die Rollen 21, 22 einen geringen Abstand in der Größenordnung eines Millimeters aufweisen, umgeschaltet werden. Im dargestellten Ausführungsbeispiel wird dieser geringe Verstellweg durch elastische Verformung eines Verstellbereichs 23 der brückenförmigen Lagereinrichtung 30 verwirklicht. Die Lagereinrichtung 30 ist in diesem Fall bevorzugt aus einem tafelförmigen Metallhalbzeug z. B. aus Stahl oder Aluminium geformt. Der Verstellbereich 23 ist über durch Trennfugen 24 bis 28 gebildete Federelemente 31 bis 34 mit dem Basisbereich 29 der Lagereinrichtung 30 verbunden, wobei die Federelemente 31, 32 bzw. 33, 34 symmetrisch beiderseits der Symmetrielinie zwischen den beiden Längsholm-Lagerstellen angeordnet sind. Der Verstellbereich 23 kann so unter elastischer Verformung der Federelemente 31 bis 34 vom Basisbereich 29 weg und wieder auf ihn zu bewegt werden. Als Verstelleinrichtung ist eine Exzentereinrichtung 40 mit einer Lasche 41 vorgesehen, deren eines Ende drehbar über ein Rollenlager 42 im Basisbereich 29 der brückenförmigen Lagereinrichtung 30 zwischen den Längsholm-Lagerstellen auf einem Exzenterelement 43 gelagert ist und deren anderes Ende jenseits der Trennfugen 24 bis 28 in einem Lagerzapfen 44 des Verstellbereichs 23 schwenkbar gelagert ist.

Das Exzenterelement 43 befindet sich auf einer Steuerwelle 45 und verschiebt bei Verdrehung der Steuerwelle 45 über die Lasche 41 den federnd gelagerten Verstellbereich 23 der Lagereinrichtung 30. Das Exzenterelement 43 ist scheibenförmig und auf einem Bereich der Steuerwelle 45 mit Vierkantprofil aufgesetzt.

An der Lagereinrichtung 30 sind ferner Anschlageinrichtungen 50 im Verlauf des Schwingungsübertragungsweges von den Lagerrollen 21 oder 22 zur Schwingbrücke 11 vorgesehen, mit denen die elastisch verformbaren Federbereiche 31 bis 34 nach ihrer zur Aktivierung erfolgten Verformung zur Ausschaltung unerwünschter Elastizitäten überbrückt werden. Die Anschlageinrichtungen 50 befinden sich symmetrisch links und rechts der Symmetrielinie im Übertragungsweg zwischen der jeweiligen Lagerrolle 21 oder 23 und der Längsholm-Lagerstelle. Die linke 24 bzw. rechte Trennfuge 25 ist so angeordnet, daß Anschlagflächen 51, 52 des Verstellbereichs 23 gegen Anschlagflächen 53, 54 des Basisbereichs 29 anlegbar sind und dadurch die elastischen Federbereiche 31 bis 34 überbrückt sind. Die beiden Trennfugen 24, 25 bilden eine Hinterschneidung, gefolgt von einem vertikal und einem horizontal verlaufenden Abschnitt, der mit Abstand zur Symmetrielinie endet. Den horizontal verlaufenden Abschnitt umgreift jeweils eine U-förmige Trennfuge 26 bzw. 27, wobei die U-förmigen Trennfugen 26, 27 über eine weitere Trennfuge 28 miteinander verbunden sind. Durch diese Trennfugenanordnungen sind beiderseits der Symmetrielinie zwei Blattfeder-Elemente 31, 32 und 33, 34 in der Lagereinrichtung 30 ausgeformt, die den elastisch verformbaren Bereich bilden.

Die Steuerwelle 45 erstreckt sich zwischen den Längsholmen 13, 14 und ist so mit Exzenterelementen 43 versehen, daß jeder Lagereinrichtung bzw. Lagerbrücke 30 eine Exzentereinrichtung 43 zugeordnet ist und durch Verdrehen der Steuerwelle 45 jeweils zwei Lagereinrichtungen 30 wie in der Fig. 3 schematisch dargestellt aktiviert werden können. Bezogen auf die Nummerierung nur im unteren Bild der Fig. 3 und der entsprechenden Nummerierung in Fig. 1 heißt das, wahlweise Aktivierung der Nummern 2 + 6 (unteres Bild), 3 + 6 (mittleres Bild mit Nummern aus dem untersten Bild) und 3 + 7 (oberstes Bild).

Um die Unwuchtbestimmung unterschiedlicher in wahlloser Folge zugeführter Kurbelwellen auf der erfindungsgemäßen Unwuchtmeßstation durchzuführen, ist es also lediglich erforderlich, bestimmte Lagereinrichtungen 30 abhängig vom Kurbelwellentyp zu aktivieren, ohne daß aufwendige Umrüstaktionen erforderlich sind. Dieser Vorgang - Erkennen des Kurbelwellentyps und Aktivieren bestimmter Lagereinrichtungen 30 - läßt sich auf einfachste Art automatisieren, da bei der vorgeschlagenen Ausführungsform die Aktivierung lediglich durch eine Verdrehung einer Steuer- oder Nockenwelle erfolgt.

Ordnet man jeder Lagerstelle einer Kurbelwelle eine aktivierbare Lagereinrichtung zu, so kann ohne weiteres in der Unwuchtmeßstation auch der Unwuchtausgleich durch z. B. Bohren oder Fräsen vorgenommen werden. Beim Unwuchtausgleichsvorgang werden alternativ oder zusätzlich zu den während des Unwuchtmeßvorgangs aktivierten Lagereinrichtungen die beiderseits des Unwuchtausgleichsorts nächstgelegenen Lagereinrichtungen aktiviert, so daß ein sicheres Gegenlager bei der Bearbeitung gebildet wird. Das Ausgleichswerkzeug kann in nicht dargestellter Weise über weitere Längsholme axial verschieblich geführt werden.

Vorteilhaft in Hinblick auf Automatisierung sind ferner nicht dargestellte druckmittelbetätigte oder elektrische Verstelleinrichtungen, die an die Stelle der Exzenterverstelleinrichtungen treten können. Mit diesen Verstelleinrichtungen lassen sich auch ein- oder mehrteilige Gleitlager anstelle der Rollenlagerung sehr einfach verstellen.

## Patentansprüche

1. Unwuchtmeßstation zur Bestimmung der Unwucht von mehrere Lagerstellen aufweisenden Kurbelwellen (10), mit einer Einrichtung (15, 17) zum Antrieb der Kurbelwelle (10), mit auf einer Schwingbrücke (11) abgestützten Lagereinrichtungen (30) zur rotierbaren Lagerung der Kurbelwelle (10) und mit einer Einrichtung zur Erfassung der Unwuchtschwingungen, **dadurch gekennzeichnet, daß** an der Schwingbrücke (11) mehr als zwei Lagereinrichtungen (30) zur rotierbaren Lagerung der Kurbelwelle (10) abgestützt sind und eine Einrichtung vorgesehen ist, mit der der radiale Abstand zwischen Lagerstellen der Kurbelwelle (10) und zugehörigen Lagereinrichtungen (30) der Unwuchtmeßstation für die rotierbare Lagerung der Kurbelwelle (10) bei jeder der vorhandenen Lagereinrichtuhgen (30) veränderbar ist, wobei zwei Lagerstellen zur rotierbaren Lagerung der Kurbelwelle (10) abhängig vom Kurbelwellentyp aus den Lagerstellen auswählbar sind und die Kurbelwelle (10) nur mit den ausgewählten Lagerstellen auf den zugeordneten Lagereinrichtungen (30) rotierbar abgestützt ist.

2. Unwuchtmeß- und Ausgleichsstation zum Unwuchtausgleich von mehrere Lagerstellen aufweisenden Kurbelwellen (10), mit einer Einrichtung (15, 17) zum Antrieb der Kurbelwelle (10), mit auf einer Schwingbrücke (11) abgestützten Lagereinrichtungen (30) zur Lagerung der Kurbelwelle (10), mit einer Einrichtung zur Erfassung der Unwuchtschwingungen und mit einer Einrichtung zur Vornahme eines Unwuchtausgleichs, **dadurch gekennzeichnet, daß** an der Schwingbrücke (11) mehr als zwei Lagereinrichtungen (30) zur insbesondere rotierbaren Lagerung der Kurbelwelle (10) abgestützt sind und eine Einrichtung vorgesehen ist, mit der der radiale Abstand zwischen Lagerstellen an der Kurbelwelle (10) und zugehörigen Lagereinrichtungen (30) bei jeder der vorhandenen Lagereinrichtungen (30) veränderbar ist, wobei für einen Unwuchtmeßlauf zwei Lagerstellen zur Lagerung der Kurbelwelle (10) abhängig vom Kurbelwellentyp aus den Lagerstellen auswählbar sind und die Kurbelwelle (10) während des Unwuchtmeßlaufs nur mit den ausgewählten Lagerstellen auf den zugeordneten Lagereinrichtungen (30) rotierbar abgestützt ist, während die nicht rotierende Kurbelwelle (10) während eines Unwuchtausgleichvorgangs an ausgewählten Lagerstellen und zugeordneten Lagereinrichtungen (30) abgestützt ist.

3. Station nach einem oder beiden der vorhergehenden Ansprüche, **dadurch gekennzeichnet, daß** zumindest eine Lagereinrichtung (30) mehrere Lagerelemente aufweist.

4. Station nach Anspruch 3 **dadurch gekennzeichnet, daß** jede Lagereinrichtung (30) oder zumindest ein Lagerelement der Lagereinrichtung mechanisch, elektrisch oder druckmittelbetätigt vorzugsweise in radialer Richtung bewegbar ist.

5. Station nach einem oder mehreren der vorhergehenden Ansprüche, **dadurch gekennzeichnet, daß** zur Bewegung in radialer Richtung zumindest ein Teil (31-34) jeder Lagereinrichtung (30) elastisch verformbar ist.

6. Station nach Anspruch 5, **dadurch gekennzeichnet, daß** zur elastischen Verformung die jeweiligen Lagereinrichtungen (30) mechanisch, elektrisch oder druckmittelbetätigt beaufschlagt sind.

7. Station nach Anspruch 6, **dadurch gekennzeichnet, daß** eine Exzentereinrichtung (40-44) zur Beaufschlagung vorgesehen ist.

8. Station nach Anspruch 7, **dadurch gekennzeichnet, daß** jede Lagereinrichtung eine zugeordnete Exzentereinrichtung (40-44) aufweist.

9. Station nach Anspruch 8, **dadurch gekennzeichnet, daß** die Exzentereinrichtungen (40-44) auf einer gemeinsamen Steuerwelle (45) angeordnet sind.

10. Station nach Anspruch 9, **dadurch gekennzeichnet, daß** die Steuerwelle als Nockenwelle ausgebildet ist.

11. Station nach einem oder beiden der vorhergehenden Ansprüche 9 und 10, **dadurch gekennzeichnet, daß** die Steuerwelle (45) exzentrisch angeordnete zylindrische Abschnitte (43) aufweist, auf denen vorzugsweise kugelgelagert an der jeweiligen Lagereinrichtung schwenkbar befestigte Laschen (41) angeordnet sind.

12. Station nach einem oder mehreren der vorhergehenden Ansprüche 9 bis 11, **dadurch gekennzeichnet, daß** die Lagerbrücken auf zwei die Längsholme (13, 14) der Schwingbrücke (11) bildenden Stangenelementen angeordnet sind und daß zwischen den Stangenelementen die Steuerwelle (45) angeordnet ist.

13. Station nach einem oder mehreren der vorhergehenden Ansprüche 5 bis 12, **dadurch gekennzeichnet, daß** jede Lagereinrichtung Anschlageinrichtungen (50) aufweist, mit denen der elastisch verformbare Bereich (31-34) der Lagereinrichtung nach erfolgter Verformung überbrückt ist.

14. Station nach Anspruch 13, **dadurch gekennzeichnet, daß** die Anschlageinrichtungen (50) im Bereich zwischen dem Lagerelement in Form z. B. eines Gleit- oder Rollenlagers (21, 22) und den Längsholmen (13, 14) vorgesehen sind.

15. Station nach einem oder mehreren der vorhergehenden Ansprüche 5 bis 14, **dadurch gekennzeichnet, daß** der elastisch verformbare Bereich bistabile Federelemente aufweist.

16. Station nach einem oder mehreren der vorhergehenden Ansprüche, **dadurch gekennzeichnet, daß** die Zahl der Lagereinrichtungen (30) mehr als zwei aber weniger als die Zahl der Lagerstellen an der Kurbelwelle (10) beträgt.

## Claims

1. Unbalance measuring station for determining the unbalance of crankshafts (10) having a plurality of bearing points, comprising a device (15, 17) for driving the crankshaft (10), comprising bearing devices (30) supported on a vibration bridge (11) for the rotatable support of the crankshaft (10), and comprising a device for detecting the unbalance vibrations, **characterized in that** supported on the vibration bridge (11) are more than two bearing devices (30) for the rotatable support of the crankshaft (10) and a device is provided, by means of which the radial clearance between bearing points of the crankshaft (10) and associated bearing devices (30) of the unbalance measuring station for the rotatable support of the crankshaft (10) is variable for each of the provided bearing devices (30), wherein two bearing points for the rotatable support of the crankshaft (10) are selectable depending on the crankshaft type from the bearing points and the crankshaft (10) is rotatably supported only by the selected bearing points on the associated bearing devices (30).

2. Unbalance measuring and compensating station for compensating the unbalance of crankshafts (10) having a plurality of bearing points, comprising a device (15, 17) for driving the crankshaft (10), comprising bearing devices (30) supported on a vibration bridge (11) for support of the crankshaft (10), comprising a device for detecting the unbalance vibrations, and comprising a device for effecting an unbalance compensation, **characterized in that** supported on the vibration bridge (11) are more than two bearing devices (30) for the, in particular, rotatable support of the crankshaft (10) and a device is provided, by means of which the radial clearance between bearing points on the crankshaft (10) and associated bearing devices (30) is variable for each of the provided bearing devices (30), wherein for an unbalance measuring run two bearing points for the support of the crankshaft (10) are selectable depending on the crankshaft type from the bearing points and the crankshaft (10) during the unbalance measuring run is rotatably supported only by the selected bearing points on the associated bearing devices (30), while the non-rotating crankshaft (10) during an unbalance compensating operation is supported at selected bearing points and associated bearing devices (30).

3. Station according to one or both of the preceding claims, **characterized in that** at least one bearing device (30) comprises a plurality of bearing elements.

4. Station according to claim 3, **characterized in that** each bearing device (30) or at least one bearing element of the bearing device is movable mechanically, electrically or in a pressure-medium-actuated manner preferably in radial direction.

5. Station according to one or more of the preceding claims, **characterized in that**, for the movement in radial direction, at least one part (31-34) of each bearing device (30) is elastically deformable.

6. Station according to claim 5, **characterized in that**, for the elastic deformation, the respective bearing devices (30) are loaded mechanically, electrically or in a pressure-medium-actuated manner.

7. Station according to claim 6, **characterized in that** an eccentric device (40-44) is provided for loading purposes.

8. Station according to claim 7, **characterized in that** each bearing device comprises an associated eccentric device (40-44).

9. Station according to claim 8, **characterized in that** the eccentric devices (40-44) are disposed on a common control shaft (45).

10. Station according to claim 9, **characterized in that** the control shaft takes the form of a camshaft.

11. Station according to one or both of the preceding claims 9 and 10, **characterized in that** the control shaft (45) comprises eccentrically disposed cylindrical portions (43), on which are disposed preferably via ball bearings link plates (41), which are pivotally fastened to the respective bearing device.

12. Station according to one or more of the preceding claims 9 to 11, **characterized in that** the bearing bridges are disposed on two rod elements forming the longitudinal bars (13, 14) of the vibration bridge (11) and that the control shaft (45) is disposed between the rod elements.

13. Station according to one or more of the preceding claims 5 to 12, **characterized in that** each bearing device comprises stop devices (50), by means of which the elastically deformable region (31-34) of the bearing device is bridged after deformation has been effected.

14. Station according to claim 13, **characterized in that** the stop devices (50) are provided in the region between the bearing element in the form of e.g. a plain or roller bearing (21, 22) and the longitudinal bars (13, 14).

15. Station according to one or more of the preceding claims 5 to 14, **characterized in that** the elastically deformable region comprises bistable spring elements.

16. Station according to one or more of the preceding claims, **characterized in that** the number of bearing devices (30) is more than two but less than the number of bearing points on the crankshaft (10).

## Revendications

1. Poste de mesure de balourd pour déterminer le balourd de plusieurs vilebrequins (10) présentant des emplacements de palier avec un dispositif (15, 17) pour l'entraînement du vilebrequin (10), comportant des agencements de palier (30), soutenus par un pont oscillant 11, pour supporter en rotation le vilebrequin (10), et comportant un dispositif de détection des oscillations dues au balourd, **caractérisé en ce que** sur le pont oscillant (11) sont soutenus plus de deux agencements de palier (30) pour supporter en rotation le vilebrequin (10), et il est prévu un dispositif au moyen duquel on peut faire varier la distance radiale entre des emplacements de palier du vilebrequin (10) et des agencements de palier (30) correspondants du poste de mesure de balourd pour supporter en rotation le vilebrequin (10) dans chacun des agencements de palier (30) existants, deux emplacements de palier pour supporter en rotation le vilebrequin (10) pouvant être choisis en fonction du type du vilebrequin parmi les emplacements de palier, et le vilebrequin (10) étant soutenu en rotation uniquement avec les emplacements de palier choisis sur les agencements de palier (30) correspondants.

2. Poste de mesure de balourd et d'équilibrage pour compenser le balourd de plusieurs vilebrequins (10) présentant des emplacements de palier, comportant un dispositif (15, 17) pour l'entraînement du vilebrequin (10), comportant des agencements de palier (30), soutenus par un pont oscillant 11, pour supporter en rotation le vilebrequin (10), et comportant un dispositif de détection des oscillations dues au balourd, et comportant un dispositif pour compenser un balourd, **caractérisé en ce que** sur le pont oscillant (11) sont soutenus plus de deux agencements de palier (30) pour supporter en rotation le vilebrequin (10), et il est prévu un dispositif au moyen duquel on peut faire varier la distance radiale entre des emplacements de palier du vilebrequin (10) et des agencements de palier (30) correspondants du poste de mesure de balourd pour supporter en rotation le vilebrequin (10) dans chacun des agencements de palier (30) existants, pour un cycle de mesure du balourd deux emplacements de palier du vilebrequin (10) pouvant être choisis en fonction du type du vilebrequin parmi les emplacements de palier et le vilebrequin (10) n'étant soutenu en rotation, pendant le cycle de mesure du balourd, qu'avec les emplacements de palier choisis sur les agencements de palier (30) correspondants, tandis que le vilebrequin (10) non tournant est soutenu, pendant une opération de compensation du balourd, sur des emplacements de palier choisis et des agencements de palier (30) correspondants.

3. Poste selon l'une ou les deux revendications précédentes, **caractérisé en ce qu'**au moins un agencement de palier (30) comporte plusieurs éléments de palier.

4. Poste selon la revendication 3, **caractérisé en ce que** chaque agencement de palier (30) ou au moins un élément de palier de l'agencement de palier est déplaçable dans la direction radiale de manière mécanique, électrique ou actionnée par un fluide sous pression.

5. Poste selon une ou plusieurs des revendications précédentes, **caractérisé en ce que** pour le déplacement dans la direction radiale, au moins une partie (31-34) de chaque agencement de palier (30) est déformable élastiquement.

6. Poste selon la revendication 5, **caractérisé en ce que** pour la déformation élastique les agencement de palier (30) respectifs sont sollicités de manière mécanique, électrique ou actionnés par un fluide sous pression.

7. Poste selon la revendication 6, **caractérisé en ce qu'**il est prévu un dispositif à excentrique (40-44) pour la sollicitation.

8. Poste selon la revendication 7, **caractérisé en ce que** chaque agencement de palier comporte un dispositif à excentrique (40-44) associé.

9. Poste selon la revendication 8, **caractérisé en ce que** les dispositifs à excentrique (40-44) sont disposés sur un arbre de commande (45) commun.

10. Poste selon la revendication 9, **caractérisé en ce que** l'arbre de commande est conformé en arbre à cames.

11. Poste selon une ou les deux revendications 9 et 10, **caractérisé en ce que** l'arbre de commande (45) comporte des parties cylindriques (43) disposées excentrées sur lesquelles sont disposées des attaches (41) fixées pivotantes sur l'agencement de palier respectif, de préférence par l'intermédiaire de roulements à billes.

12. Poste selon une ou plusieurs des revendications 9 à 11 précédentes, **caractérisé en ce que** les ponts de palier sont disposés sur deux éléments en barre formant les longerons (13, 14) du pont oscillant (11), et **en ce que** l'arbre de commande (45) est disposé entre les éléments en barre.

13. Poste selon une ou plusieurs des revendications 5 à 12 précédentes, **caractérisé en ce que** chaque agencement de palier comporte des dispositifs de butée (50) au moyen desquels la zone (31-34) déformable élastiquement de l'agencement de palier peut être franchie après déformation.

14. Poste selon la revendication 13, **caractérisé en ce que** les dispositifs de butée (50) sont prévus dans la zone entre l'élément de palier sous la forme par exemple d'un palier de glissement ou palier de roulement (21, 22) et les longerons (13, 14).

15. Poste selon une ou plusieurs des revendications 5 à 14 précédentes, **caractérisé en ce que** la zone déformable élastiquement comporte des éléments à ressort bistables.

16. Poste selon une ou plusieurs des revendications précédentes, **caractérisé en ce que** le nombre d'agencements de palier (30) est supérieur à deux mais inférieur au nombre d'emplacement de palier sur le vilebrequin (10).
